# FASCICULE DE BREVET EUROPEEN

(11) **EP 3 823 899 B1**
(45) Date de publication et mention de la délivrance du brevet: **24.05.2023**
(21) Numéro de dépôt: 19758435.2
(22) Date de dépôt: 15.07.2019
(51) Int. Cl.: B64D 27/24, B64D 27/02, H02J 5/00, H02J 4/00

(54) **AERONEF MULTI-ROTORS COMPRENANT UN SYSTEME DE PROPULSION ET DE GENERATION ELECTRIQUE NON PROPULSIVE**
MULTI-ROTOR FLUGZEUG UMFASSEND EIN SYSTEM FÜR PROPULSION UND NICHT TREIBENDE ELEKTRIZITÄTSERZEUGUNG
MULTI-ROTOR AIRCRAIFT COMPRISING A SYSTEM FOR PROPULSION AND NON-PROPULSIVE ELECTRICITY GENERATION

(30) Priorité: 16.07.2018 FR 1856549
(43) Date de publication de la demande: 26.05.2021
(73) Titulaire: Safran Electrical & Power, 31702 Blagnac (FR)
(72) Inventeur: VINSON, Garance, 31702 BLAGNAC (FR); NIERLICH, Florent, 31702 BLAGNAC (FR); GARCIA, Jean-Pierre, 31702 BLAGNAC (FR)
(74) Mandataire: Cabinet Beau de Loménie
(86) Numéro de dépôt international: PCT/FR2019/051767
(87) Numéro de publication internationale: WO 2020/016510

(56) Documents cités:
- EP-A1- 3 103 670
- EP-A1- 3 296 212
- EP-A1- 3 318 492
- US-A1- 2016 340 051

## Description

### Arrière-plan de l'invention

L'invention se rapporte à un système de propulsion et de génération électrique non propulsive pour un aéronef et plus particulièrement à l'architecture d'une chaîne électrique d'un système de propulsion hybride pour un aéronef doté d'une pluralité de rotors.

Les aéronefs à décollage et atterrissage verticaux sont de plus en plus utilisés notamment dans le transport intra-urbain et inter-urbain des marchandises ou des personnes.

De plus en plus de ces aéronefs fonctionnent avec des systèmes de propulsion hybride, c'est-à-dire avec un système comprenant une turbomachine, un générateur électrique et une batterie, car les systèmes purement électriques fonctionnant seulement à partir d'une batterie ne sont viables que pour le transport d'une charge sur une courte distance comme ceux sur le marché intra-urbain, l'autonomie des batteries, liée à la faible densité de puissance des batteries par rapport à un turbogénérateur, n'étant pas suffisante pour les autres marchés.

EP 3 296 212 A1 divulgue un aéronef comprenant un système de propulsion et de génération électrique, le système comprenant au moins une turbomachine et au moins deux couples de rotors, tel que le système comprend en outre au moins quatre moteurs électriques entraînant chacun un rotor, au moins un générateur électrique couplé à une turbomachine et au moins deux lignes d'alimentation électrique.

### Objet et résumé de l'invention

L'invention vise à fournir une solution de chaîne électrique pour un système de propulsion hybride permettant de transporter des charges importantes sur de longues et moyennes distances. L'invention vise pour cela à fournir un système de propulsion et de génération électrique non propulsive pour un aéronef qui soit durable, optimisé en masse, évolutif en fonction des besoins et des capacités des batteries, optimisé en coûts aussi bien en terme de maintenance que d'exploitation, et optimisé en terme d'intégration dans l'aéronef.

Dans un premier objet de l'invention, il est proposé un système de propulsion et de génération électrique non propulsive pour un aéronef, le système comprenant au moins une turbomachine et au moins deux couples de rotors, les rotors d'un même couple de rotors étant destinés à avoir des emplacements symétriquement opposés sur l'aéronef.

Selon une caractéristique générale du premier objet de l'invention, le système comprend en outre :
- au moins quatre moteurs électriques entraînant chacun un rotor,
- au moins un générateur électrique couplé à une turbomachine,
- au moins deux lignes d'alimentation électrique, le nombre de lignes d'alimentation étant au plus égal au nombre de rotors dudit système, chaque ligne d'alimentation comprenant au moins une branche électrique de propulsion couplée à un desdits moteurs électriques, une batterie couplée en sortie à ladite au moins une branche de propulsion, et un convertisseur alternatif-continu couplé entre une sortie d'un générateur électrique et ladite au moins une branche de propulsion.

Le système selon l'invention permet ainsi de fournir à un aéronef une chaîne électrique optimisée en masse, en coût, en performance, en modularité et en évolutivité, tout en permettant une intégration optimisée sur l'aéronef grâce à l'utilisation d'un nombre réduits d'équipements et de câblage, et l'utilisation d'équipements plus légers, et plus facile à installer sur un aéronef multi-rotors à système de propulsion hybride ou électrique.

Le système selon l'invention permet notamment de segmenter la puissance électrique globale en une pluralité de lignes d'alimentation indépendantes, de type à haute tension continue (HVDC en anglais), formant avec les moteurs et rotors associés une pluralité de modules de propulsion commandés.

La segmentation de l'alimentation électrique permet en outre d'avoir des éléments de puissance de plus petites dimensions, ce qui permet de définir des protections électriques et des câbles plus efficaces. La segmentation permet de baisser la puissance par élément. Par exemple au lieu d'un unique redresseur de 300 kW, on peut utiliser, en segmentant, trois redresseurs de 100 kW, avec de plus faibles courants.

L'utilisation d'un générateur électrique avec un convertisseur alternatif-continu permet de créer et de distribuer un bus à haute tension continue qui permet en outre de raccorder simplement et efficacement une batterie continue à haute tension en parallèle. Le convertisseur permet de contrôler l'hybridation entre le générateur électrique et la batterie en pilotant notamment la tension sur la ligne d'alimentation, mais également le démarrage de la turbomachine en inversant le générateur électrique en moteur électrique de démarrage.

Selon un premier aspect du système de propulsion et de génération électrique non propulsive, le système peut comprendre en outre des moyens de commande configurés pour couper l'alimentation des moteurs d'un même couple de rotors lorsqu'au moins un moteur dudit couple de rotors est mis en défaut.

Selon un deuxième aspect du système de propulsion et de génération électrique non propulsive, au moins une ligne d'alimentation électrique peut comprendre en outre une branche d'alimentation de composants électriques non propulsifs.

Il est ainsi possible d'alimenter les composants électriques non propulsifs de l'aéronef à partir de différentes lignes d'alimentation électrique.

Selon un troisième aspect du système de propulsion et de génération électrique non propulsive, le ou chaque générateur électrique peut comprendre une machine électrique dotée d'au moins deux bobinages triphasés électriquement et électromagnétiquement indépendants, un redresseur alternatif-continu pour chaque bobinage triphasé intégré dans la machine électrique et indépendant et isolé, et un dispositif de déconnexion électromécanique rapide raccordé entre la turbomachine et le générateur électrique, le convertisseur alternatif-continu de chaque ligne d'alimentation étant formé par un redresseur alternatif-continu d'une machine électrique.

La machine électrique multi-bobinage permet de réduire la masse globale du système tout en respectant l'isolation électrique et électromagnétique entre les bobinages. Elle permet par exemple d'utiliser deux machines dotés chacune de trois bobinages triphasés plutôt que six machines dotées chacune d'un seul bobinage triphasé.

L'intégration des convertisseurs alternatif-continu dans la machine électrique forme un générateur électrique intelligent, ou « Smart Generator » en anglais, qui permet d'optimiser l'intégration et la masse du système. Cela permet également d'atteindre une plus grande densité de puissance par rapport aux machines à induction ou aux machines à courant continu.

Les convertisseurs alternatif-continu sont intégrés en mécatronique. Il partage donc le circuit de refroidissement liquide de la turbomachine et du générateur électronique.

Le dispositif de déconnexion électromécanique rapide permet d'isoler le générateur électrique de la turbomachine.

Selon un quatrième aspect du système de propulsion et de génération électrique non propulsive, ledit générateur électrique peut être une machine électrique à aimants permanents.

Une machine électrique à aimants permanents présente une meilleure densité de puissance que d'autre types de machines.

Selon un cinquième aspect du système de propulsion et de génération électrique non propulsive, chaque ligne d'alimentation peut comprendre en outre un convertisseur électrique continu-continu raccordé entre le convertisseur alternatif-continu et la batterie pour permettre la recharge de la batterie à partir du générateur électrique.

Le convertisseur électrique continu-continu permet de faciliter la recharge de la batterie à partir du générateur électrique. Le convertisseur électrique continu-continu permet de protéger la batterie en évitant les courants trop élevés et en limitant la vitesse de charge.

Selon un sixième aspect du système de propulsion et de génération électrique non propulsive, le système peut comprendre en outre des bus numériques séries à haute vitesse et haute intégrité couplés entre les moyens de commande et les moteurs.

Les bus numériques séries à haute vitesse et haute intégrité peuvent utiliser un protocole de communication tel qu'un protocole Ethernet synchrone et déterministe à très haute vitesse. Le standard Ethernet permet d'utiliser des couches physiques dissimilaires standards (optique ou cuivre) déjà qualifiées et donc à coûts réduits. Il est possible d'utiliser d'autre type de bus également comme les bus LVDS^{®}, RS 485^{®} par exemple.

Selon un septième aspect du système de propulsion et de génération électrique non propulsive, les moyens de commande peuvent comprendre une carte de commande par ligne d'alimentation, les cartes de commande étant en communication entre elles, chaque carte de commande comprenant un module de contrôle de la tension de la ligne d'alimentation à laquelle elle est associée configuré pour commander la tension à fournir par le convertisseur alternatif-continu et la tension à fournir par la batterie en fonction du niveau de charge de la batterie et de la tension des moteurs alimentés par la ligne d'alimentation, la tension dépendant de la vitesse ou du couple requis par les moteurs.

Selon un huitième aspect du système de propulsion et de génération électrique non propulsive, comprenant deux fois plus de couples de moteurs que de couples de rotors, chaque ligne d'alimentation comprenant deux branches de propulsion, et chaque couple de rotors étant associés à deux lignes d'alimentation distinctes, le premier moteur du premier rotor et le premier moteur du second rotor d'un même couple de rotors étant alimentés par une première ligne d'alimentation et le second moteur du premier rotor et le second moteur du second rotor dudit même couple de rotors étant alimentés par une seconde ligne d'alimentation.

Chaque ligne d'alimentation alimente ainsi deux moteurs entraînant les deux rotors d'un même couple de rotors, les rotors étant symétriquement opposés sur l'aéronef par rapport à un axe ou un point de l'aéronef. Cela rend ainsi la panne d'une ligne d'alimentation ou des moteurs alimentés par la ligne compensable par les moyens de commande pour maintenir une propulsion symétriquement équilibrée pour l'aéronef.

Dans un autre objet de l'invention, il est proposé un aéronef comprenant un système de propulsion et de génération électrique non propulsive tel que défini ci-dessus.

### Brève description des dessins.

L'invention sera mieux comprise à la lecture faite ci-après, à titre indicatif mais non limitatif, en référence aux dessins annexés sur lesquels :
- la figure 1 présente de manière schématique la répartition des rotors d'un aéronef multi-rotors selon un mode de réalisation de l'invention ;
- la figure 2 représente schématiquement une architecture électrique d'un système de propulsion et de génération électrique non propulsive selon un premier mode de réalisation de l'invention ;

- la figure 3 représente schématiquement une architecture électrique d'un système de propulsion et de génération électrique non propulsive selon un deuxième mode de réalisation de l'invention ;
- la figure 4 représente schématiquement une architecture électrique d'un système de propulsion et de génération électrique non propulsive selon un troisième mode de réalisation de l'invention ;
- la figure 5 présente schématiquement une variante de réalisation d'un générateur électrique du système selon l'invention.

### Description détaillée de modes de réalisation

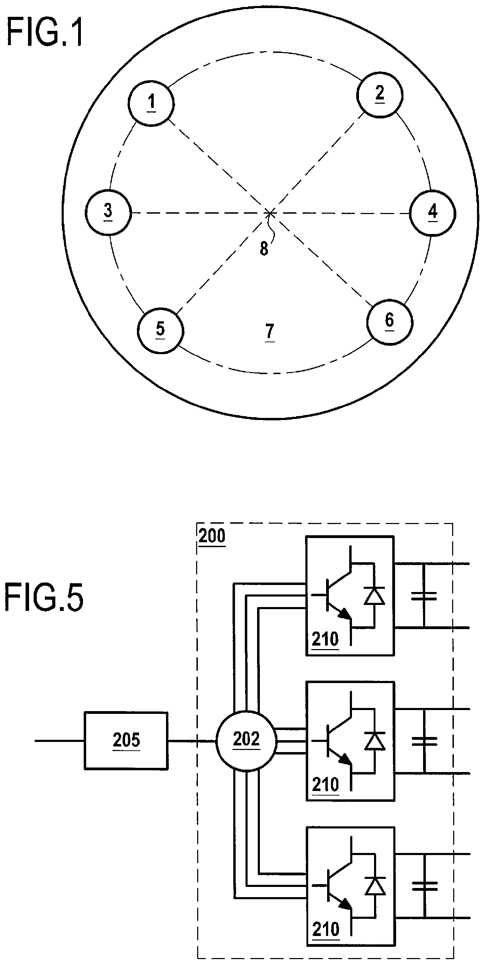

Sur la figure 1 est présentée de manière schématique la répartition sur un cercle en trait mixte des rotors 1 à 6 d'un aéronef 7 multi-rotors selon un mode de réalisation de l'invention

Dans l'exemple illustré, un aéronef 7 comprend six rotors 1 à 6 formant trois couples de rotors, les rotors d'un même couple étant symétriquement opposé par rapport à un centre de symétrie 8. Le premier couple de rotors comprend les rotors 1 et 6, le deuxième couple de rotors comprend les rotors 2 et 5, le troisième couple de rotors comprend les rotors 3 et 4.

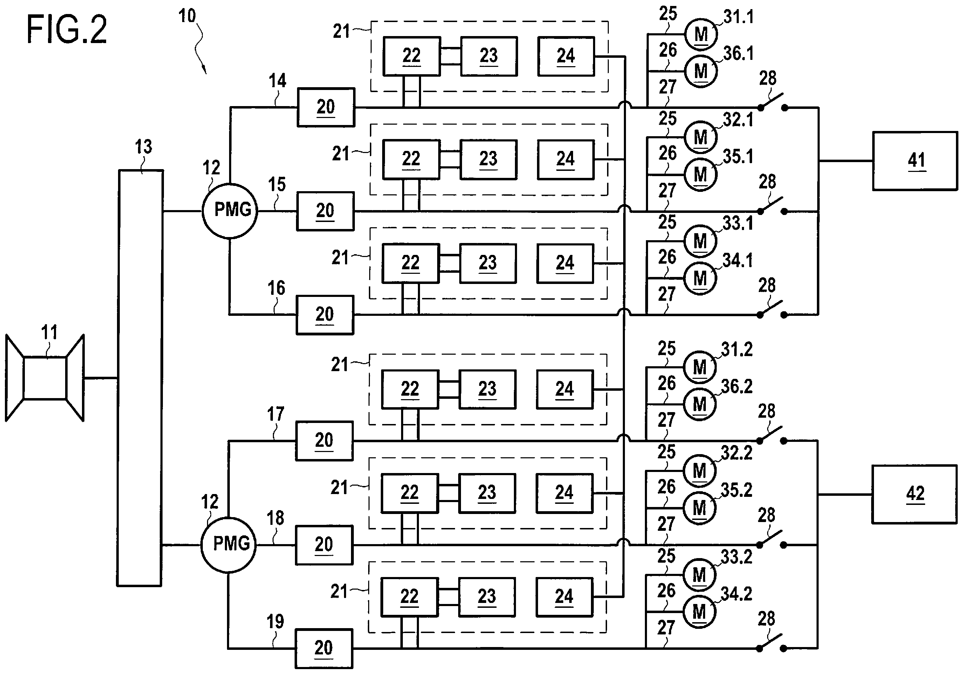

Sur la figure 2 est représentée schématiquement une première architecture électrique d'un système 10 de propulsion et de génération électrique non propulsive de l'aéronef 7 selon un premier mode de réalisation de l'invention.

Le système 10 comprend une turbomachine 11 et deux générateurs électriques 12 à aimants permanents. Les deux générateurs électriques 12 sont mécaniquement entraînés par la turbomachine 11 au travers d'une même boîte d'engrenages 13.

Chaque générateur électrique 12 comprend trois sorties électriques alimentant chacune une ligne d'alimentation électrique, référencée respectivement 14 à 19 sur la figure 2. Chaque ligne d'alimentation 14 à 19 comprend un convertisseur alternatif-continu 20 et une unité de puissance 21 comportant une batterie 22, un convertisseur continu-continu 23 et un module de commande 24. Chaque ligne d'alimentation 14 à 19 comprend en outre une première et une seconde branches de propulsion 25 et 26, ainsi qu'une branche d'alimentation supplémentaire 27 pour l'alimentation électrique de composants électriques non propulsifs 41 ou 42.

Dans le premier mode de réalisation illustré sur la figure 2, le système 10 comprend en outre six couples de moteurs électriques, soit douze moteurs électriques, les moteurs étant numériquement référencés 31.1, 31.2, 32.1, 32.2, 33.1, 33.2, 34.1, 34.2, 35.1, 35.2, 36.1, 36.2. Les moteurs électriques 31.1 à 36.2 sont alimentés chacun par une branche de propulsion 25 ou 26 d'une ligne d'alimentation 14 à 19, chaque moteur étant associé à un rotor 1 à 6.

Chaque rotor 1 à 6 est associé à un couple de moteurs électriques pour offrir une redondance électrique et ainsi réduire la puissance électrique que doit fournir chaque moteur électrique, ce qui permet de réduire les dimensions des moteurs. En outre, la redondance des moteurs permet d'améliorer la sécurité de fonctionnement du système de propulsion dans le cas d'une défaillance d'un des moteurs.

Le premier rotor 1 est entraîné par le couple de moteur formés par les moteurs 31.1 et 31.2, le deuxième rotor 2 est entraîné par les moteurs 32.1 et 32.2, le troisième rotor 3 est entraîné par les moteurs 33.1 et 33.2, le quatrième rotor 4 est entraîné par les moteurs 34.1 et 34.2, le cinquième rotor 5 est entraîné par les moteurs 35.1 et 35.2 et le sixième rotor 6 est entraîné par les moteurs 36.1 et 36.2.

Chaque rotor 1 à 6 est ainsi entraîné par un couple de deux moteurs électriques 31.1 à 36.2, chacun des deux moteurs d'un même couple de moteurs étant alimenté par une ligne d'alimentation 14 à 19 différente. Ainsi, le premier moteur 31.1 du premier couple de moteurs 31.1 et 31.2 est alimenté par la première branche de propulsion 25 de la première ligne d'alimentation 14 tandis que le second moteur 31.2 du premier couple de moteurs 31.1 et 31.2 est alimenté par la première branche de propulsion 25 de la quatrième ligne d'alimentation 17. Le premier moteur 32.1 du deuxième couple de moteurs 32.1 et 32.2 est alimenté par la première branche de propulsion 25 de la deuxième ligne d'alimentation 15 tandis que le second moteur 32.2 du deuxième couple de moteurs 32.1 et 32.2 est alimenté par la première branche de propulsion 25 de la cinquième ligne d'alimentation 18. Le premier moteur 33.1 du troisième couple de moteurs 33.1 et 33.2 est alimenté par la première branche de propulsion 25 de la troisième ligne d'alimentation 16 tandis que le second moteur 32.2 du troisième couple de moteurs 33.1 et 33.2 est alimenté par la première branche de propulsion 25 de la sixième ligne d'alimentation 19. Le premier moteur 34.1 du quatrième couple de moteurs 34.1 et 34.2 est alimenté par la seconde branche de propulsion 26 de la troisième ligne d'alimentation 16 tandis que le second moteur 34.2 du quatrième couple de moteurs 34.1 et 34.2 est alimenté par la seconde branche de propulsion 26 de la sixième ligne d'alimentation 19. Le premier moteur 35.1 du deuxième couple de moteurs 35.1 et 35.2 est alimenté par la seconde branche de propulsion 26 de la deuxième ligne d'alimentation 15 tandis que le second moteur 35.2 du cinquième couple de moteurs 35.1 et 35.2 est alimenté par la seconde branche de propulsion 26 de la cinquième ligne d'alimentation 18. Le premier moteur 36.1 du sixième couple de moteurs 36.1 et 36.2 est alimenté par la seconde branche de propulsion 26 de la première ligne d'alimentation 14 tandis que le second moteur 36.2 du sixième couple de moteurs 36.1 et 36.2 est alimenté par la seconde branche de propulsion 26 de la quatrième ligne d'alimentation 17.

Les trois branches d'alimentation supplémentaire 27 des trois premières lignes d'alimentation 14 à 16 alimentent un premier ensemble de composants électriques non propulsifs 41 via trois interrupteurs commandés 28 permettant chacun de coupler une ligne d'alimentation aux composants. Les trois branches d'alimentation supplémentaire 27 des trois dernières lignes d'alimentation 17 à 19 alimentent un second ensemble de composants électriques non propulsifs 42 via trois interrupteurs commandés 28 permettant chacun de coupler une ligne d'alimentation aux composants.

Les modules de commande 24 des lignes d'alimentation 14 à 19 sont couplées ensemble et forment ensemble des moyens de commande. Chaque module de communication 24 d'une ligne d'alimentation 14 à 19 commande ainsi la batterie 23 et le convertisseur continu-continu 22 pour recharger la batterie à partir d'un générateur électrique 12 via le convertisseur alternatif-continu 20 ou délivrer une tension d'alimentation aux branches de propulsion 25 et 26 de la ligne d'alimentation en fonction du niveau de charge de la batterie 23 et de la puissance requise par les moteurs électriques correspondants.

En outre, les modules de commande 24 sont couplés entre eux ainsi qu'aux moteurs via des bus numériques séries à haute vitesse et haute intégrité.

La segmentation de la puissance d'alimentation fournie par cette architecture permet de couper l'alimentation de deux moteurs symétriquement opposés lorsqu'un moteur ou une ligne est défaillant.

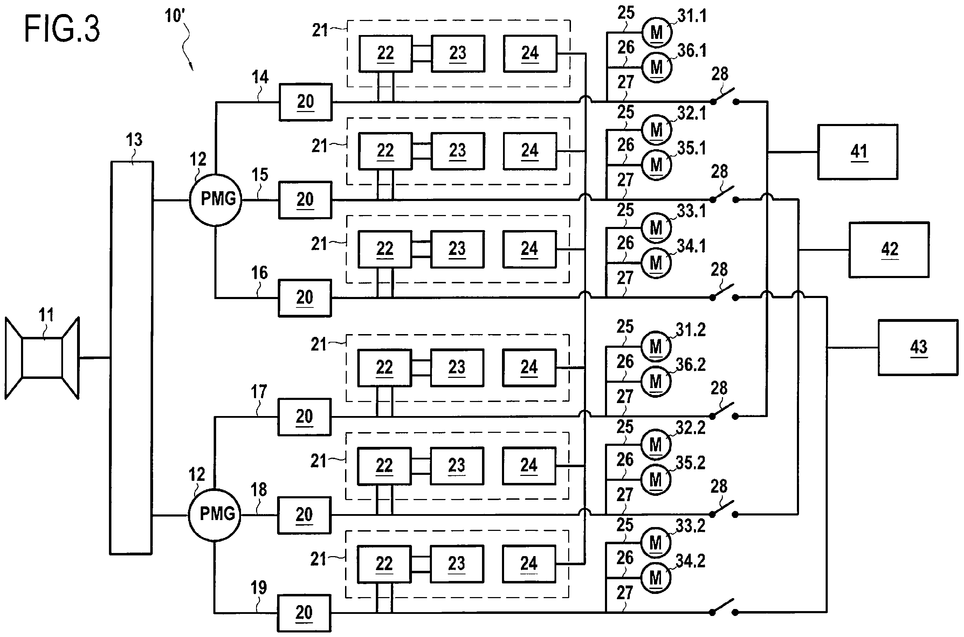

Sur la figure 3 est représentée schématiquement une deuxième architecture électrique d'un système 10' de propulsion et de génération électrique non propulsive de l'aéronef 7 selon un deuxième mode de réalisation de l'invention. Les éléments identiques au premier mode de réalisation illustré sur la figure 2 portent les mêmes références numériques.

Cette architecture diffère de la première architecture du premier mode de réalisation illustrée sur la figure 2 en ce qu'elle alimente trois ensembles de composants électriques non propulsifs différents 41 à 43. La branche d'alimentation supplémentaire 27 de la première ligne d'alimentation 14 et la branche d'alimentation supplémentaire 27 de la quatrième ligne d'alimentation 17 alimentent un premier ensemble de composants électriques non propulsifs 41 via deux interrupteurs commandés 28 permettant chacun de coupler une ligne d'alimentation aux composants. La branche d'alimentation supplémentaire 27 de la deuxième ligne d'alimentation 15 et la branche d'alimentation supplémentaire 27 de la cinquième ligne d'alimentation 18 alimentent un deuxième ensemble de composants électriques non propulsifs 42 via deux interrupteurs commandés 28 permettant chacun de coupler une ligne d'alimentation aux composants. Et la branche d'alimentation supplémentaire 27 de la troisième ligne d'alimentation 16 et la branche d'alimentation supplémentaire 27 de la sixième ligne d'alimentation à 19 alimentent un troisième ensemble de composants électriques non propulsifs 43 via deux interrupteurs commandés 28 permettant chacun de coupler une ligne d'alimentation aux composants.

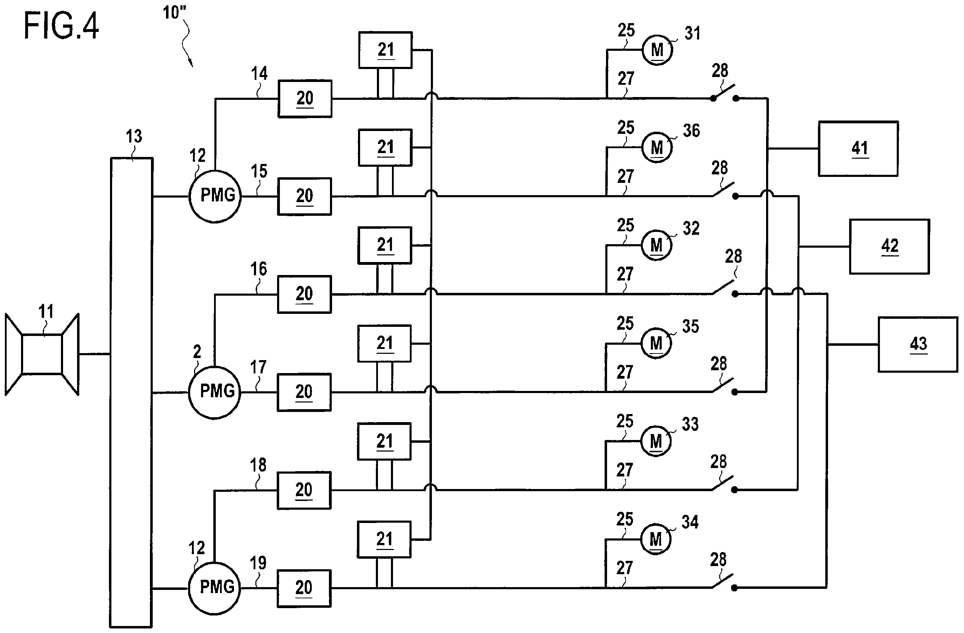

Sur la figure 4 est représentée schématiquement une troisième architecture électrique d'un système 10" de propulsion et de génération électrique non propulsive d'un aéronef selon un troisième mode de réalisation de l'invention. Les éléments identiques au second mode de réalisation illustré sur la figure 3 portent les mêmes références numériques.

Cette architecture diffère de la deuxième architecture du deuxième mode de réalisation illustrée sur la figure 3 en ce qu'elle ne comprend que six moteurs 31 à 36 entraînant chacun un rotor 1 à 6, chaque moteur électrique 31 à 36 étant alimenté par une ligne d'alimentation 14 à 16 qui comporte une seule branche de propulsion 25 et une branche d'alimentation supplémentaire 27, le système comprenant trois générateurs électriques 12 couplés à la turbomachine 11 via une même boîte d'engrenages 13, chaque générateur électrique 12 comportant deux sorties triphasées alimentant chacune une ligne d'alimentation 14 à 19.

Dans le troisième mode de réalisation, les moyens de commande sont configurés pour couper l'alimentation d'un moteur d'un couple de moteurs lorsqu'un défaut apparaît sur le fonctionnement de l'autre moteur du couple.

Sur la figure 5 est présentée schématiquement une variante de réalisation d'un générateur électrique du système selon l'invention.

Dans cette variante l'ensemble formé d'un générateur électrique 12 à trois sorties et de trois convertisseurs alternatif-continu 20 est remplacé par un générateur électrique intelligent 200, ou « smart motor » en anglais associé à un dispositif 205 de déconnexion électromécanique rapide raccordé entre la turbomachine 11 et le générateur électrique 200. Le smart motor comprend une machine électrique 202 dotée de trois bobinages triphasés électriquement et électromagnétiquement indépendants, et d'un redresseur alternatif-continu 210 pour chaque bobinage triphasé intégré dans le smart motor et indépendant et isolé.

L'invention fournit ainsi une solution de chaîne électrique pour un système de propulsion hybride permettant de transporter des charges importantes sur de longues distances. L'invention vise pour cela à fournir un système de propulsion et de génération électrique non propulsive pour un aéronef qui soit durable, optimisé en masse, évolutif en fonction des besoins et des capacités des batteries, optimisé en coûts aussi bien en terme de maintenance que d'exploitation, et optimisé en terme d'intégration dans l'aéronef.

## Revendications

1. Aéronef (7) comprenant un système (10, 10', 10") de propulsion et de génération électrique non propulsive, le système (10, 10', 10") comprenant au moins une turbomachine (11) et au moins deux couples de rotors (1 à 6), et les rotors d'un même couple de rotors (1 et 6, 2 et 5, 3 et 4) ayant des emplacements symétriquement opposés sur l'aéronef (7) par rapport à un même centre de symétrie, tel que le système (10, 10', 10") comprend en outre :
- au moins quatre moteurs électriques (31.1 à 36.2, 31 à 36) entraînant chacun un rotor (1 à 6),
- au moins un générateur électrique (12) couplé à une turbomachine (11),
- au moins deux lignes d'alimentation électrique (14 à 19), le nombre de lignes d'alimentation (14 à 19) étant au plus égal au nombre de rotors (1 à 6) dudit système (10, 10', 10"), chaque ligne d'alimentation (14 à 19) comprenant au moins une branche électrique de propulsion (25, 26) couplée à un desdits moteurs électriques (31.1 à 36.2, 31 à 36), une batterie (23) couplée en sortie à ladite au moins une branche de propulsion (25, 26), et un convertisseur alternatif-continu (20) couplé entre une sortie d'un générateur électrique (12) et ladite au moins une branche de propulsion (25, 26).

2. Aéronef (7) selon la revendication 1, dans lequel le système (10, 10', 10") comprend en outre de moyens de commande configurés pour couper l'alimentation des moteurs d'un même couple de rotors (1 et 6, 2 et 5, 3 et 4) lorsqu'au moins un moteur dudit couple de rotors (1 et 6, 2 et 5, 3 et 4) est mis en défaut.

3. Aéronef (7) selon l'une des revendications 1 ou 2, dans lequel au moins une ligne d'alimentation électrique (14 à 19) comprend en outre une branche d'alimentation (27) de composants électriques non propulsifs (41, 42, 43).

4. Aéronef (7) selon l'une des revendications 1 à 3, dans lequel le ou chaque générateur électrique (12) comprend une machine électrique (200) dotée d'au moins deux bobinages triphasés électriquement et électromagnétiquement indépendants, un redresseur alternatif-continu (210) pour chaque bobinage triphasé intégré dans la machine électrique et indépendant et isolé, et un dispositif (205) de déconnexion électromécanique rapide raccordé entre la turbomachine (11) et le générateur électrique (12), le convertisseur alternatif-continu de chaque ligne d'alimentation étant formé par un redresseur alternatif-continu d'une machine électrique.

5. Aéronef (7) selon l'une des revendications 1 à 4, dans lequel ledit générateur électrique (12) est une machine électrique à aimants permanents.

6. Aéronef (7) selon l'une des revendications 1 à 5, dans lequel chaque ligne d'alimentation (14 à 19) comprend en outre un convertisseur électrique continu-continu (22) raccordé entre le convertisseur alternatif-continu (20) et la batterie (23) pour permettre la recharge de la batterie (23) à partir du générateur électrique (12).

7. Aéronef (7) selon la revendication 2 ou l'une des revendications 3 à 6 en combinaison avec la revendication 2, dans lequel le système (10, 10', 10") comprend en outre des bus numériques séries à haute vitesse et haute intégrité couplés entre les moyens de commande et les moteurs.

8. Aéronef (7) selon la revendication 2 ou l'une des revendications 3 à 7 en combinaison avec la revendication 2, dans lequel les moyens de commande comprennent une carte de commande (24) par ligne d'alimentation (14 à 19), les cartes de commande (24) étant en communication entre elles, chaque carte de commande (24) comprenant un module de contrôle de la tension de la ligne d'alimentation (14 à 19) à laquelle elle est associée configuré pour commander la tension à fournir par le convertisseur alternatif-continu (20) et la tension à fournir par la batterie (23) en fonction du niveau de charge de la batterie (23) et de la tension requise par les moteurs alimentés par la ligne d'alimentation (14 à 19).

9. Aéronef (7) selon l'une des revendications 1 à 8, dans lequel le système (10, 10') comprend deux fois plus de moteurs (31.1 à 36.2) que de rotors (1 à 6), chaque ligne d'alimentation (14 à 19) comprenant deux branches de propulsion (25, 26), et chaque couple de rotors (1 et 6, 2 et 5, 3 et 4) étant associé à deux lignes d'alimentation (14 à 19) distinctes, le premier moteur (31.1) du premier rotor (1) et le premier moteur (36.1) du second rotor (6) d'un même couple de rotors (1 et 6) étant alimentés par une première ligne d'alimentation (14) et le second moteur (31.2) du premier rotor (1) et le second moteur (36.2) du second rotor (6) dudit même couple de rotors (1 et 6) étant alimentés par une seconde ligne d'alimentation (17).

## Patentansprüche

1. Flugzeug (7), das ein System (10, 10', 10") für Propulsion und nicht propulsive Elektrizitätserzeugung umfasst, wobei das System (10, 10', 10") mindestens eine Turbomaschine (11) und mindestens zwei Paare von Rotoren (1 bis 6) umfasst, und die Rotoren desselben Rotorpaars (1 und 6, 2 und 5, 3 und 4) gegenüberliegende symmetrische Platzierungen auf dem Flugzeug (7) im Verhältnis zum gleichen Symmetriezentrum derart haben, dass das System (10, 10', 10") ferner umfasst:
- mindestens vier Elektromotoren (31.1 bis 36.2, 31 bis 36), die jeweils einen Rotor (1 bis 6) antreiben,
- mindestens einen Stromerzeuger (12), der an eine Turbomaschine (11) gekoppelt ist,
- mindestens zwei elektrische Versorgungsleitungen (14 bis 19), wobei die Anzahl der Versorgungsleitungen (14 bis 19) höchstens gleich der Anzahl der Rotoren (1 bis 6) des Systems (10, 10', 10") ist, wobei jede Versorgungsleitung (14 bis 19) mindestens eine elektrische Propulsionsabzweigung (25, 26), die an einen der Elektromotoren (31.1 bis 36.2, 31 bis 36) gekoppelt ist, eine Batterie (23), die am Ausgang an die mindestens eine Propulsionsabzweigung (25, 26) gekoppelt ist, und einen Wechselstrom-Gleichstrom-Wandler (20), der zwischen einem Ausgang eines Stromerzeugers (12) und der mindestens einen Propulsionsabzweigung (25, 26) gekoppelt ist, umfasst.

2. Flugzeug (7) nach Anspruch 1, wobei das System (10, 10', 10") ferner Steuermittel umfasst, die ausgelegt sind, um die Versorgung der Motoren desselben Rotorpaars (1 und 6, 2 und 5, 3 und 4) zu unterbrechen, wenn mindestens ein Motor des Rotorpaars (1 und 6, 2 und 5, 3 und 4) defekt ist.

3. Flugzeug (7) nach einem der Ansprüche 1 oder 2, wobei mindestens eine elektrische Versorgungsleitung (14 bis 19) ferner eine Versorgungsabzweigung (27) nicht propulsiver elektrischer Komponenten (41, 42, 43) umfasst.

4. Flugzeug (7) nach einem der Ansprüche 1 bis 3, wobei der oder jeder Stromerzeuger (12) eine elektrische Maschine (200), die mit mindestens zwei elektrisch und elektromagnetisch unabhängigen dreiphasigen Wicklungen versehen ist, einen unabhängigen und isolierten Wechselstrom-Gleichstrom-Gleichrichter (210) für jede in die elektrische Maschine integrierte dreiphasige Wicklung und eine elektromechanische Schnellunterbrechungsvorrichtung (205) umfasst, die zwischen der Turbomaschine (11) und dem Stromerzeuger (12) angeschlossen ist, wobei der Wechselstrom-Gleichstrom-Wandler jeder Versorgungsleitung von einem Wechselstrom-Gleichstrom-Wandler einer elektrischen Maschine gebildet ist.

5. Flugzeug (7) nach einem der Ansprüche 1 bis 4, wobei der Stromerzeuger (12) eine elektrische Maschine mit Dauermagneten ist.

6. Flugzeug (7) nach einem der Ansprüche 1 bis 5, wobei jede Versorgungsleitung (14 bis 19) ferner einen elektrischen Gleichstrom-Gleichstrom-Wandler (22) umfasst, der zwischen dem Wechselstrom-Gleichstrom-Wandler (20) und der Batterie (23) angeschlossen ist, um das Aufladen der Batterie (23) ausgehend von dem Stromerzeuger (12) zu gestatten.

7. Flugzeug (7) nach Anspruch 2 oder einem der Ansprüche 3 bis 6 in Kombination mit Anspruch 2, wobei das System (10, 10', 10") ferner digitale Hochgeschwindigkeits- und Hochintegritäts-Serienbusse umfasst, die zwischen den Steuermitteln und den Motoren gekoppelt sind.

8. Flugzeug (7) nach Anspruch 2 oder einem der Ansprüche 3 bis 7 in Kombination mit Anspruch 2, wobei die Steuermittel eine Steuerkarte (24) je Versorgungsleitung (14 bis 19) umfassen, wobei die Steuerkarten (24) miteinander kommunizieren, wobei jede Steuerkarte (24) ein Kontrollmodul der Spannung der Versorgungsleitung (14 bis 19) umfasst, der sie zugeordnet ist, das ausgelegt ist, um die vom Wechselstrom-Gleichstrom-Wandler (20) bereitzustellende Spannung und die von der Batterie (23) bereitzustellende Spannung in Abhängigkeit vom Ladezustand der Batterie (23) und der von den Motoren, die von der Versorgungsleitung (14 bis 19) versorgt werden, verlangten Spannung zu steuern.

9. Flugzeug (7) nach einem der Ansprüche 1 bis 8, wobei das System (10, 10') zweimal mehr Motoren (31.1 bis 36.2) als Rotoren (1 bis 6) umfasst, wobei jede Versorgungsleitung (14 bis 19) zwei Propulsionsabzweigungen (25, 26) umfasst und jedes Rotorpaar (1 bis 6, 2 und 5, 3 und 4) zwei verschiedenen Versorgungsleitungen (14 bis 19) zugeordnet ist, wobei der erste Motor (31.1) des ersten Rotors (1) und der erste Motor (36.1) des zweiten Rotor (6) desselben Rotorpaars (1 und 6) von einer ersten Versorgungsleitung (14) versorgt werden und der zweite Motor (31.2) des ersten Rotors (1) und der zweite Motor (36.2) des zweiten Rotors (6) desselben Rotorpaars (1 und 6) von einer zweiten Versorgungsleitung (17) versorgt werden.

## Claims

1. Aircraft (7) comprising a propulsion and non-propulsive electrical generation system (10, 10', 10"), the system (10, 10', 10") comprising at least one turbomachine (11) and at least two pairs of rotors (1 to 6), and the rotors of the same pair of rotors (1 and 6, 2 and 5, 3 and 4) having symmetrically opposite locations on the aircraft (7) with respect to a same center of symmetry, such that the system (10, 10', 10") further comprises:
- at least four electrical motors (31.1 to 36.2, 31 to 36) each driving a rotor (1 to 6),
- at least one electrical generator (12) coupled to a turbomachine (11),
- at least two electrical power supply lines (14 to 19), the number of power supply lines (14 to 19) being at most equal to the number of rotors (1 to 6) of said system (10, 10', 10"), each power supply line (14 to 19) comprising at least one electrical propulsion branch (25, 26) coupled to one of said electrical motors (31.1 to 36.2, 31 to 36), a battery (23) coupled at the output to said at least one propulsion branch (25, 26), and an AC-DC converter (20) coupled between an output of an electrical generator (12) and said at least one propulsion branch (25, 26).

2. Aircraft (7) according to claim 1, wherein the system (10, 10', 10") further comprises control means configured to cut off the power supply to the motors of the same pair of rotors (1 and 6, 2 and 5, 3 and 4) when at least one motor of said pair of rotors (1 and 6, 2 and 5, 3 and 4) is defected.

3. Aircraft (7) according to any of claims 1 or 2, wherein at least one electrical power supply line (14 to 19) further comprises a non-propulsive electrical components (41, 42, 43) supply branch (27).

4. Aircraft (7) according to any one of claims 1 to 3, wherein the or each electrical generator (12) comprises an electrical machine (200) provided with at least two electrically and electromagnetically independent three-phase windings, an independent and isolated AC-DC rectifier (210) for each three-phase winding integrated into the electrical machine, and a rapid electromechanical disconnection device (205) connected between the turbomachine (11) and the electrical generator (12), the AC-DC converter of each power supply line being formed by an AC-DC rectifier of an electrical machine.

5. Aircraft (7) according to any one of claims 1 to 4, wherein said electrical generator (12) is a permanent-magnet electrical machine.

6. Aircraft (7) according to any one of claims 1 to 5, wherein each power supply line (14 to 19) further comprises a DC-DC electrical converter (22) connected between the AC-DC converter (20) and the battery (23) to allow recharging of the battery (23) from the electrical generator (12).

7. Aircraft (7) according to claim 2 or to any one of claims 3 to 6 in combination with claim 2, wherein the system (10, 10', 10") further comprises high-speed and high-integrity serial digital buses coupled between the control means and the motors.

8. Aircraft (7) according to claim 2 or to any one of claims 3 to 7 in combination with claim 2, wherein the control means comprise a control card (24) per power supply line (14 to 19), the control cards (24) being in communication with each other, each control card (24) comprising a module for monitoring the voltage of the power supply line (14 to 19) with which it is associated, configured to control the voltage to be provided by the AC-DC converter (20) and the voltage to be provided by the battery (23) based on the charge level of the battery (23) and on the voltage required by the motors supplied by the power supply line (14 to 19).

9. Aircraft (7) according to any one of claims 1 to 8, wherein the system (10, 10') comprises twice as many motors (31.1 to 36.2) as rotors (1 to 6), each power supply line (14 to 19) comprising two propulsion branches (25, 26), and each pair of rotors (1 and 6, 2 and 5, 3 and 4) being associated with two separate power supply lines (14 to 19), the first motor (31.1) of the first rotor (1) and the first motor (36.1) of the second rotor (6) of the same pair of rotors (1 and 6) being supplied by a first power supply line (14) and the second motor (31.2) of the first rotor (1) and the second motor (36.2) of the second rotor (6) of said same pair of rotors (1 and 6) being supplied by a second power supply line (17).
